(19) Europäisches Patentamt
European Patent Office
Office européen des brevets

(11) **EP 4 576 605 A1**

(12) **EUROPEAN PATENT APPLICATION**
published in accordance with Art. 153(4) EPC

(43) Date of publication:
**25.06.2025 Bulletin 2025/26**

(51) International Patent Classification (IPC):
**H04B 10/077** (2013.01)

(21) Application number: **23867064.0**

(52) Cooperative Patent Classification (CPC):
**H04B 10/077; H04B 10/079**

(22) Date of filing: **30.06.2023**

(86) International application number:
**PCT/CN2023/104424**

(87) International publication number:
**WO 2024/060769 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.09.2022 CN 202211137249**

(71) Applicant: **Huawei Technologies Co., Ltd.**
**Shenzhen, Guangdong 518129 (CN)**

(72) Inventors:
• **XIN, Haiyun**
  **Shenzhen, Guangdong 518129 (CN)**
• **MA, Huixiao**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **TDEC TEST METHOD AND RELATED DEVICE**

(57) Embodiments of this application disclose a method for testing a TDEC and a related device, to improve an equalization processing capability, and reduce complexity of estimating a SER, so as to be better applied to a scenario with severe signal impairment. Specifically, the method includes: obtaining a to-be-tested signal obtained through channel transmission of an original signal transmitted by a transmitter; performing first equalization processing on the to-be-tested signal based on at least one first tap coefficient to obtain a first signal; obtaining a product of a level corresponding to the original signal and a second tap coefficient, and performing second equalization processing on the first signal based on the product to obtain a second signal, where a difference obtained by subtracting the second tap coefficient from a sum of all first tap coefficients is 1; obtaining an eye pattern of the second signal, and performing sampling at a target position of the eye pattern to obtain a third signal; obtaining a target SER obtained by superimposing target noise on the third signal; and adjusting the target noise based on a SER threshold to adjust the target SER, for calculating the TDEC based on adjusted target noise if the target SER is equal to the SER threshold.

FIG. 3

**EP 4 576 605 A1**

**Description**

This application claims priority to Chinese Patent Application No. 202211137249.8, filed with the China National Intellectual Property Administration on September 19, 2022 and entitled "METHOD FOR TESTING TDEC AND RELATED DEVICE", which is incorporated herein by reference in its entirety.

**TECHNICAL FIELD**

This application relates to the communication field, and in particular, to a method for testing a TDEC and a related device.

**BACKGROUND**

In some optical communication network scenarios, for example, intra-data interconnection, to implement communication between one receiver and different transmitters, a consistency test needs to be performed on the different transmitters. Currently, a method for performing a consistency test on a transmitter includes measuring an eye mask (Eye Mask), a transmitter and dispersion penalty (transmitter dispersion penalty, TDP), and a transmitter and dispersion eye closure penalty (transmitter dispersion eye closure penalty, TDEC). For a 4-order pulse amplitude modulation (4-order pulse amplitude modulation, PAM-4) signal, transmitter and dispersion eye closure for PAM-4 (Transmitter and dispersion eye closure for PAM-4, TDECQ) needs to be tested. A physical meaning of the TDEC is to calculate a ratio of amount of maximum superimposed noise on an ideal signal to power of maximum superimposed noise on a to-be-tested signal under given conditions of a bit error threshold and a reference receiver.

Typically, to make a TDEC result more valuable, parameters of a TDEC test receiver should be approximate to these of receivers in most actual systems. In a current solution of performing the consistency test on the transmitter, the TDEC test receiver performs equalization processing by using a feed forward equalizer (Feed forward equalizer, FFE) and calculates the TDEC. However, in a next-generation optical communication scenario, to handle severer signal impairment, the real receiver in the actual system uses a technology with a stronger equalization capability. Consequently, the TDEC test receiver has an equalization capability weaker than that of the receiver in the actual system, and the current TDEC test receiver and the current TDEC testing method have poor application effects in a severe signal impairment scenario.

**SUMMARY**

Embodiments of this application provide a method for testing a TDEC and a related device, to improve an equalization processing capability, and reduce complexity of estimating a SER, so as to be better applied to a scenario with severe signal impairment.

According to a first aspect, an embodiment of this application provides a method for testing a TDEC. The method includes the following steps: obtaining a to-be-tested signal obtained through channel transmission of an original signal transmitted by a transmitter; performing first equalization processing on the to-be-tested signal based on at least one first tap coefficient to obtain a first signal; obtaining a product of a level corresponding to the original signal and a second tap coefficient, and performing second equalization processing on the first signal based on the product to obtain a second signal, where a difference obtained by subtracting the second tap coefficient from a sum of all the first tap coefficients is 1; obtaining an eye pattern of the second signal, and performing sampling at a target position of the eye pattern to obtain a third signal; obtaining a target SER obtained by superimposing target noise on the third signal; and adjusting the target noise to adjust the target SER, for calculating the TDEC based on adjusted target noise if the target SER is equal to a SER threshold.

In this implementation, in this application, the first equalization processing and the second equalization processing are combined, to improve an equalization capability, so that a high baud rate system is better supported. In addition, this application provides a method for estimating a target SER obtained through equalization processing. DFE error propagation is not first considered, and a DFE performs equalization processing by using the original signal, to obtain an initial SER without consideration of the error propagation of the DFE, and then calculates a modification factor and modifies the initial SER based on the modification factor to obtain the target SER. It should be understood that the modification factor may be considered as a SER increase multiple caused by the DFE error propagation, so that a real estimation of the SER obtained through the DFE equalization processing can be obtained. In this manner, under a condition in which a length of a test sequence of the original signal is limited, low operational complexity of estimating the SER is implemented, so that a scenario with severe signal impairment is better applied.

In some possible implementations, the obtaining a target SER obtained by superimposing target noise on the third signal includes: obtaining an initial SER obtained by superimposing the target noise on the third signal; and further modifying the initial SER based on a modification factor to obtain the target SER.

In some possible implementations, the modifying the initial SER based on a modification factor to obtain the target SER includes: multiplying the initial SER by the modification factor to obtain the target SER.

In some possible implementations, the modification factor satisfies the following formula 1:

$$f_{modify} = \frac{1}{1 - (P_E - SER_0)}$$

where $f_{modify}$ represents the modification factor, $SER_0$ represents the initial SER, $P_E$ represents a SER obtained through the second equalization processing due to a decision error of a second symbol that is based on an erroneously decided first symbol, and a receiving moment of the first symbol is earlier than a receiving moment of the second symbol.

In some possible implementations, the modification factor satisfies the following formula 2:

$$f_{modify} = \frac{1}{1 - P_E}$$

where $f_{modify}$ represents the modification factor, $P_E$ represents a SER obtained through the second equalization processing due to a decision error of a second symbol that is based on an erroneously decided first symbol, and a receiving moment of the first symbol is earlier than a receiving moment of the second symbol.

In some possible implementations, $P_E$ is determined by the second tap coefficient, a root mean square RMS value of the target noise, and a sampling level-related parameter, and the sampling level-related parameter includes at least one of frequency distribution of sampling levels of the third signal, average optical power of the eye pattern, and an outer optical modulation amplitude of the second signal.

In some possible implementations, $P_E$ satisfies the following formula 3:

$$P_E = \sum_{i=1}^{K} P_E^k$$

where K is a quantity of eyes in the eye pattern, $P_E^k$ represents a SER that is when the second symbol is erroneously decided at a $k^{th}$ eye, and $1 \le k \le K$.

In some possible implementations, $P_E^k$ satisfies the following formula 4:

$$P_E^k = (\int CF_k(y) G_{thk}^{shift+}(y) dy + \int CF_k(y) G_{thk}^{shift-}(y) dy)/2$$

where $CF_k(y)$ represents a cumulative probability function of level distribution corresponding to the $k^{th}$ eye, $G_{thk}^{shift+}(y)$ represents a probability density function of superimposed noise obtained by offsetting a decision threshold of the $k^{th}$ eye in a first direction, and $G_{thk}^{shift-}(y)$ represents a probability density function of superimposed noise obtained by offsetting the decision threshold of the $k^{th}$ eye in a second direction, the first direction is opposite to the second direction, and y represents a sampling level value of the third signal.

In some possible implementations, $CF_k(y)$ satisfies the following formula 5:

$$CF_k(y_i) = \begin{cases} \displaystyle\sum_{y=P_{thk}}^{y_i} F(y) \text{ for } y_i \geq P_{thk} \\ \displaystyle\sum_{y=y_i}^{P_{thk}} F(y) \text{ for } y_i < P_{thk} \end{cases}$$

where $P_{thk}$ is a decision threshold of a $k^{th}$ eye, $F(y)$ represents the frequency distribution function of the sampling levels of the third signal, and $y_i$ is the representation of discretized y. $G_{thk}^{shift+}(y)$ and $G_{thk}^{shift-}(y)$ satisfy the following formula 6:

$$G_{thk}^{shift+}(y_i) = \int_{y_i-\frac{\Delta y}{2}}^{y_i+\frac{\Delta y}{2}} \frac{1}{C_{eq}\sigma_G\sqrt{2\pi}} \times e^{-\left(\frac{y-(P_{thk}+w_{DFE}\times\frac{OMA_{outer}}{K})}{C_{eq}\sigma_G\sqrt{2}}\right)^2} dy$$

$$G_{thk}^{shift-}(y_i) = \int_{y_i-\frac{\Delta y}{2}}^{y_i+\frac{\Delta y}{2}} \frac{1}{C_{eq}\sigma_G\sqrt{2\pi}} \times e^{-\left(\frac{y-(P_{thk}-w_{DFE}\times\frac{OMA_{outer}}{K})}{C_{eq}\sigma_G\sqrt{2}}\right)^2} dy$$

where $w_{DFE}$ represents the second tap coefficient, $OMA_{outer}$ represents the outer optical modulation amplitude of the second signal, $C_{eq}$ represents a coefficient of noise enhancement through the first equalization processing and the second equalization processing, $\sigma_G$ represents the RMS value of the target noise, and $\Delta y$ represents an interval between two adjacent $y_i$.

In some possible implementations, $P_E$ satisfies the following formula 7:

$$P_E = \begin{cases} 0.5 \times \text{erfc}(\dfrac{1-2w_{DFE}}{\sqrt{2}} \times \sqrt{\dfrac{3\times SNR}{(M+1)\times(M-1)}}) \times (1-\dfrac{1}{M}), w_{DFE} \leq 0.5 \\ (1-0.5\times\text{erfc}(\dfrac{2w_{DFE}-1}{\sqrt{2}} \times \sqrt{\dfrac{3\times SNR}{(M+1)\times(M-1)}})) \times (1-\dfrac{1}{M}), 0.5 < w_{DFE} \leq 1 \end{cases}$$

where erfc represents a complementary error function, an SNR represents a signal-to-noise ratio obtained by superimposing the target noise on the third signal, $w_{DFE}$ represents the second tap coefficient, M represents a quantity of level values of the original signal, and M≥2.

In some possible implementations, the SNR satisfies the following formula 8:

$$SNR = \frac{P_{sig}}{\sum_{y_i} F(y_i) \times (y_i - P_{ave})^2 - P_{sig} + \sigma_G{}^2}$$

where $P_{sig}$ represents power of a signal component without noise and distortion in the third signal, $y_i$ is a representation of a discretized sampling level value of the third signal, $P_{ave}$ represents the average optical power of the eye pattern, and $\sigma_G$ represents the RMS value of the target noise.

In some possible implementations, $P_{sig}$ satisfies the following formula 9:

$$P_{sig} = \frac{(M+1)\times(M-1)}{3} \times (\frac{OMA_{outer}}{2\times(M-1)})^2$$

where $OMA_{outer}$ represents the outer optical modulation amplitude of the second signal, M represents the quantity of level values of the original signal, and M≥2.

In some possible implementations, the original signal includes a test sequence periodically sent by the transmitter.

In some possible implementations, the first tap coefficient is a tap coefficient of a feed forward equalizer (Feed forward equalizer, FFE), and the second tap coefficient is a tap coefficient of a decision feedback equalizer (Decision feedback equalizer, DFE).

In some possible implementations, the target position of the eye pattern includes a ($0.5 - \frac{\Delta}{2}$) unit interval (Unit interval, UI) and a ($0.5 + \frac{\Delta}{2}$) UI, and $0<\Delta<1$.

In some possible implementations, the third signal includes a first sub-signal and a second sub-signal, the first sub-signal is obtained through sampling at the ($0.5 - \frac{\Delta}{2}$) UI of the eye pattern, and the first sub-signal is obtained through sampling at the ($0.5 + \frac{\Delta}{2}$) UI of the eye pattern. The obtaining a target symbol error rate SER obtained by superimposing target noise on the third signal includes: obtaining a first SER obtained by superimposing the target noise on the first sub-signal, and obtaining a second SER obtained by superimposing the target noise on the second sub-signal; and selecting a larger one of the first SER and the second SER as the target SER. For example, the first SER is greater than the second SER.

In some possible implementations, the original signal includes a signal using 4-order pulse amplitude modulation (4-order Pulse amplitude modulation, PAM-4) or a signal using 2-order pulse amplitude modulation (2-order Pulse amplitude modulation, PAM-2).

In some possible implementations, the level corresponding to the original signal is represented as $P_{ave} + \frac{OMA_{outer}}{M-1}(i - \frac{M+1}{2})$, $P_{ave}$ represents the average optical power of the eye pattern, $OMA_{outer}$ represents the outer optical modulation amplitude of the second signal, $1 \leq i \leq M$,

M represents the quantity of level values of the original signal, and $M \geq 2$.

According to a second aspect, an embodiment of this application provides a processing chip. The processing chip includes a processor and a memory. The memory and the processor are connected to each other through a line, the memory stores instructions, and the processor is configured to perform the method described in any implementation of the first aspect.

According to a third aspect, an embodiment of this application provides a TDEC test receiver, including a receiver front end and a processing chip. The receiver front end and the processing chip are connected to each other through a line. The receiver front end is configured to: convert a received optical signal into an electrical signal, and transmit the electrical signal to the processing chip. The processing chip is configured to perform the following steps: obtaining a to-be-tested signal obtained through channel transmission of an original signal transmitted by a transmitter; performing first equalization processing on the to-be-tested signal based on at least one first tap coefficient to obtain a first signal; obtaining a product of a level corresponding to the original signal and a second tap coefficient, and performing second equalization processing on the first signal based on the product to obtain a second signal, where a difference obtained by subtracting the second tap coefficient from a sum of all the first tap coefficients is 1; obtaining an eye pattern of the second signal, and performing sampling at a target position of the eye pattern to obtain a third signal; obtaining a target SER obtained by superimposing target noise on the third signal; and adjusting the target noise to adjust the target SER, for calculating the TDEC based on adjusted target noise if the target SER is equal to a SER threshold.

In some possible implementations, the processing chip is specifically configured to: obtaining an initial SER obtained by superimposing the target noise on the third signal; and modifying the initial SER based on a modification factor to obtain the target SER.

In some possible implementations, the processing chip is specifically configured to: multiplying the initial SER by the modification factor to obtain the target SER.

In some possible implementations, the modification factor satisfies the following formula 1:

$$f_{modify} = \frac{1}{1 - (P_E - SER_0)}$$

where $f_{modify}$ represents the modification factor, $SER_0$ represents the initial SER, $P_E$ represents a SER obtained through the second equalization processing due to a decision error of a second symbol that is based on an erroneously decided first symbol, and a receiving moment of the first symbol is earlier than a receiving moment of the second symbol.

In some possible implementations, the modification factor satisfies the following formula 2:

$$f_{modify} = \frac{1}{1 - P_E}$$

where $f_{modify}$ represents the modification factor, $P_E$ represents a SER obtained through the second equalization processing due to a decision error of a second symbol that is based on an erroneously decided first symbol, and a receiving moment of the first symbol is earlier than a receiving moment of the second symbol.

In some possible implementations, $P_E$ is determined by the second tap coefficient, an RMS value of the target noise, and a sampling level-related parameter, and the sampling level-related parameter includes at least one of frequency distribution of sampling levels of the third signal, average optical power of the eye pattern, and an outer optical modulation amplitude of the second signal.

In some possible implementations, $P_E$ satisfies the following formula 3:

$$P_E = \sum_{i=1}^{K} P_E^k$$

where K is a quantity of eyes in the eye pattern, $P_E^k$ represents a SER that is when the second symbol is erroneously decided at a $k^{th}$ eye, and $1 \leq k \leq K$.

In some possible implementations, $P_E^k$ satisfies the following formula 4:

$$P_E^k = (\int CF_k(y)G_{thk}^{shift+}(y)dy + \int CF_k(y)G_{thk}^{shift-}(y)dy)/2$$

where $CF_k(y)$ represents a cumulative probability function of level distribution corresponding to the $k^{th}$ eye, $G_{thk}^{shift+}(y)$ represents a probability density function of superimposed noise obtained by offsetting a decision threshold of the $k^{th}$ eye in a first direction, and $G_{thk}^{shift-}(y)$ represents a probability density function of superimposed noise obtained by offsetting the decision threshold of the $k^{th}$ eye in a second direction, the first direction is opposite to the second direction, and y represents a sampling level value of the third signal.

In some possible implementations, $CF_k(y)$ satisfies the following formula 5:

$$CF_k(y_i) = \begin{cases} \sum_{y=P_{thk}}^{y_i} F(y) & \text{for } y_i \geq P_{thk} \\ \sum_{y=y_i}^{P_{thk}} F(y) & \text{for } y_i < P_{thk} \end{cases}$$

where $P_{thk}$ is a decision threshold of a $k^{th}$ eye, $F(y)$ represents the frequency distribution function of the sampling levels of the third signal, and $y_i$ is the representation of discretized y. $G_{thk}^{shift+}(y)$ and $G_{thk}^{shift-}(y)$ satisfy the following formula 6:

$$G_{thk}^{shift+}(y_i) = \int_{y_i - \frac{\Delta y}{2}}^{y_i + \frac{\Delta y}{2}} \frac{1}{C_{eq}\sigma_G\sqrt{2\pi}} \times e^{-\left(\frac{y-(P_{thk}+w_{DFE}\times\frac{OMA_{outer}}{K})}{C_{eq}\sigma_G\sqrt{2}}\right)^2} dy$$

$$G_{thk}^{shift-}(y_i) = \int_{y_i - \frac{\Delta y}{2}}^{y_i + \frac{\Delta y}{2}} \frac{1}{C_{eq}\sigma_G\sqrt{2\pi}} \times e^{-\left(\frac{y-(P_{thk}-w_{DFE}\times\frac{OMA_{outer}}{K})}{C_{eq}\sigma_G\sqrt{2}}\right)^2} dy$$

where $w_{DFE}$ represents the second tap coefficient, $OMA_{outer}$ represents the outer optical modulation amplitude of the second signal, $C_{eq}$ represents a coefficient of noise enhancement through the first equalization processing and the second equalization processing, $\sigma_G$ represents the RMS value of the target noise, and $\Delta y$ represents an interval between two adjacent $y_i$.

In some possible implementations, $P_E$ satisfies the following formula 7:

$$P_E = \begin{cases} 0.5 \times erfc(\frac{1-2w_{DFE}}{\sqrt{2}} \times \sqrt{\frac{3 \times SNR}{(M+1) \times (M-1)}}) \times (1 - \frac{1}{M}), w_{DFE} \leq 0.5 \\ (1 - 0.5 \times erfc(\frac{2w_{DFE}-1}{\sqrt{2}} \times \sqrt{\frac{3 \times SNR}{(M+1) \times (M-1)}})) \times (1 - \frac{1}{M}), 0.5 < w_{DFE} \leq 1 \end{cases}$$

where erfc represents a complementary error function, an SNR represents a signal-to-noise ratio obtained by superimposing the target noise on the third signal, $w_{DFE}$ represents the second tap coefficient, M represents a quantity of level values of the original signal, and M≥2.

In some possible implementations, the SNR satisfies the following formula 8:

$$SNR = \frac{P_{sig}}{\sum_{y_i} F(y_i) \times (y_i - P_{ave})^2 - P_{sig} + \sigma_G^2}$$

where $P_{sig}$ represents power of a signal component without noise and distortion in the third signal, $y_i$ is a representation of a discretized sampling level value of the third signal, $P_{ave}$ represents the average optical power of the eye pattern, and $\sigma_G$ represents the RMS value of the target noise.

In some possible implementations, $P_{sig}$ satisfies the following formula 9:

$$P_{sig} = \frac{(M+1) \times (M-1)}{3} \times (\frac{OMA_{outer}}{2 \times (M-1)})^2$$

where $OMA_{outer}$ represents the outer optical modulation amplitude of the second signal, M represents the quantity of level values of the original signal, and M≥2.

In some possible implementations, the original signal includes a test sequence periodically sent by the transmitter.

In some possible implementations, the first tap coefficient is a tap coefficient of an FFE, and the second tap coefficient is a tap coefficient of a DFE.

In some possible implementations, the target position of the eye pattern includes a ($0.5 - \frac{\Delta}{2}$) UI and a ($0.5 + \frac{\Delta}{2}$) UI, and 0<Δ<1.

In some possible implementations, the third signal includes a first sub-signal and a second sub-signal, the first sub-signal is obtained through sampling at the ($0.5 - \frac{\Delta}{2}$) UI of the eye pattern, and the first sub-signal is obtained through sampling at the ($0.5 + \frac{\Delta}{2}$) UI of the eye pattern. The processing chip is specifically configured to: obtain a first SER obtained by superimposing the target noise on the first sub-signal, and obtain a second SER obtained by superimposing the target noise on the second sub-signal; and select a larger one of the first SER and the second SER as the target SER. For example, the first SER is greater than the second SER.

In some possible implementations, the original signal includes a signal using PAM-4 or a signal using PAM-2.

In some possible implementations, the level corresponding to the original signal is represented as

$$P_{ave} + \frac{OMA_{outer}}{M-1}\left(i - \frac{M+1}{2}\right)$$, $P_{ave}$ represents the average optical power of the eye pattern, $OMA_{outer}$ represents the outer optical modulation amplitude of the second signal, $1 \leq i \leq M$, M represents the quantity of level values of the original signal, and $M \geq 2$.

In this embodiment of this application, the DFE is added to the TDEC test receiver, to improve an equalization capability, so that a high baud rate system is better supported. In addition, this application provides a method for estimating a target SER obtained through equalization processing. DFE error propagation is not first considered, and a DFE performs equalization processing by using the original signal, to obtain an initial SER without consideration of the error propagation of the DFE, and then calculates a modification factor and modifies the initial SER based on the modification factor to obtain the target SER. It should be understood that the modification factor may be considered as a SER increase multiple caused by the DFE error propagation, so that a real estimation of the SER obtained through the DFE equalization processing can be obtained. In this manner, under a condition in which a length of a test sequence of the original signal is limited, low operational complexity of estimating the SER is implemented, so that a scenario with severe signal impairment is better applied.

**BRIEF DESCRIPTION OF DRAWINGS**

FIG. 1 is a diagram of a TDEC test system;

FIG. 2 is a diagram of a structure of a TDEC test receiver;

FIG. 3 is a diagram of an embodiment of a method for testing a TDEC according to an embodiment of this application;

FIG. 4 is a diagram of equalization processing according to an embodiment of this application;

FIG. 5(a) is a diagram of a first estimation effect of a SER increase multiple caused by DFE error propagation;

FIG. 5(b) is a diagram of a second estimation effect of a SER increase multiple caused by DFE error propagation;

FIG. 6(a) is a diagram of a third estimation effect of a SER increase multiple caused by DFE error propagation;

FIG. 6(b) is a diagram of a fourth estimation effect of a SER increase multiple caused by DFE error propagation; and

FIG. 7 is a diagram of a structure of a TDEC test receiver according to an embodiment of this application.

**DESCRIPTION OF EMBODIMENTS**

Embodiments of this application provide a method for testing a TDEC and a related device, to improve an equalization processing capability, and reduce complexity of estimating a SER, so as to be better applied to a scenario with severe signal impairment. It should be noted that in the specification, claims, and the foregoing accompanying drawings of this application, the terms such as "first" and "second" are intended to distinguish between similar objects, but do not limit a specific order or sequence. It should be understood that the foregoing terms are interchangeable in appropriate cases, so that embodiments described in this application can be implemented in a sequence other than the content described in this application. In addition, the terms "including" and "having" and any other variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to the process, the method, the product, or the device.

This application is mainly applied to a TDEC test scenario. A physical meaning of the TDEC is to calculate a ratio of power of maximum superimposed noise on an ideal signal to power of maximum superimposed noise on a to-be-tested signal under given conditions of a bit error threshold and a reference receiver. In some possible scenarios, for a PAM-4 signal, a TDEC test may also be denoted as a TDECQ test.

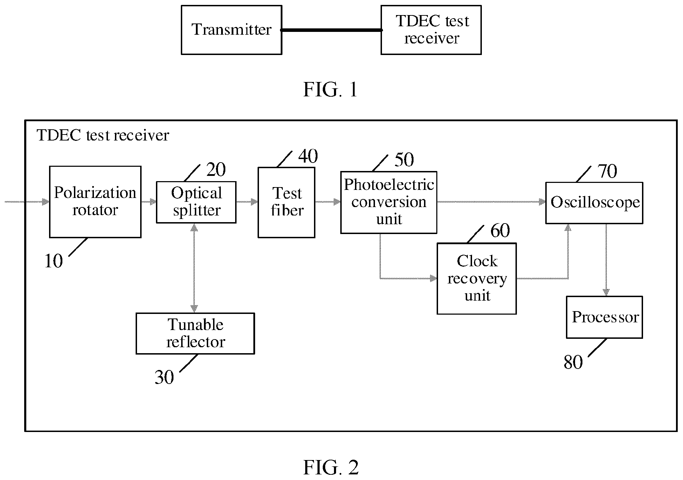

FIG. 1 is a diagram of a TDEC test system. As shown in FIG. 1, the TDEC test system includes a transmitter and a TDEC test receiver. The transmitter is configured to: generate a test sequence and modulate the test sequence into an optical signal, where the optical signal transmitted by the transmitter is transmitted to the TDEC test receiver through a channel. The TDEC test receiver processes the received optical signal to complete a TDEC test. The following further

EP 4 576 605 A1

describes the TDEC test receiver.

FIG. 2 is a diagram of a structure of a TDEC test receiver. As shown in FIG. 2, the TDEC test receiver includes a polarization rotator 10, an optical splitter 20, a tunable reflector 30, a test fiber 40, a photoelectric conversion unit 50, a clock recovery unit 60, an oscilloscope 70, and a processor 80. Specifically, the optical signal from the transmitter is transmitted to the polarization rotator 10, and maximum relative intensity noise (relative intensity noise, RIN) can be obtained by adjusting the polarization rotator 10. The optical splitter 20 splits an optical signal obtained by the polarization rotator 10 through processing, one channel of split optical signals is transmitted to the tunable reflector 30, and the other channel of split optical signals is transmitted to the photoelectric conversion unit 50 through the test fiber 40. An optical return loss (optical return loss) may meet a standard specification by adjusting the tunable reflector 30. The optical return loss refers to a ratio of optical power of a signal that is returned to an input port along an original path due to reasons such as reflection and scattering in a transmission process of inputting the optical signal to incident optical power. The photoelectric conversion unit 50 converts the received optical signal into an electrical signal, and separately transmits the electrical signal to the clock recovery unit 60 and the oscilloscope 70. The clock recovery unit 60 performs clock recovery on the electrical signal to obtain a clock signal, and transmits the clock signal to the oscilloscope 70. The oscilloscope 70 acquires a complete sampled electrical signal. The processor 80 first filters the sampled electrical signal, and finally analyzes a filtered signal to complete the TDEC test. It should be understood that a manner of acquiring the complete sampled electrical signal by the oscilloscope 70 includes but is not limited to a mode triggering manner. A manner in which the processor 80 filters the sampled electrical signal includes but is not limited to performing filtering by using a fourth-order Bessel filter whose 3-dB bandwidth is half of a baud rate.

It should be noted that, the TDEC test receiver may be specifically used as a large instrument device such as an eye pattern analyzer, or may alternatively be used as a small-sized product dedicated to the TDEC test, to improve test efficiency. The method for testing a TDEC provided in this application is mainly implemented by the processor in the TDEC test receiver. A specific structure of the processor is not limited in this application. The following describes in detail the method for testing a TDEC provided in this application.

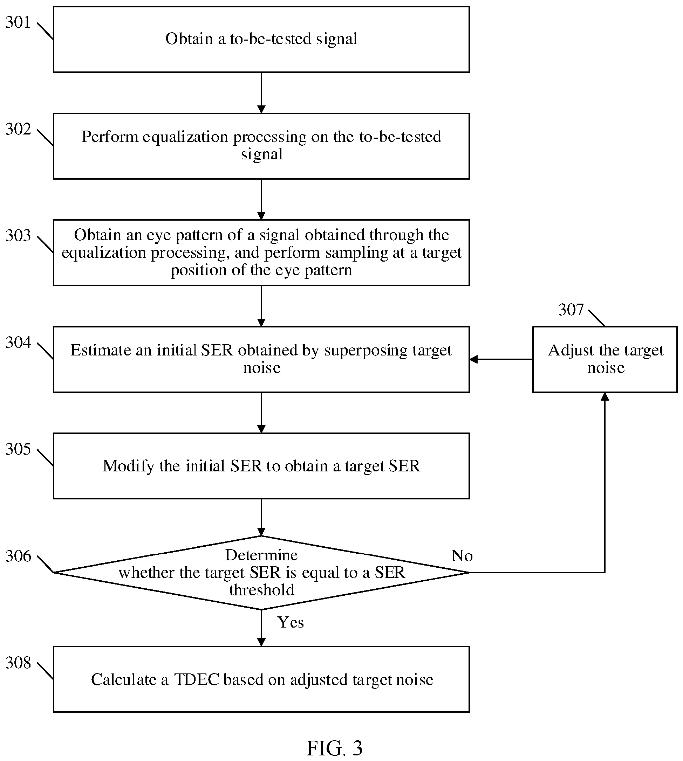

FIG. 3 is a diagram of an embodiment of a method for testing a TDEC according to an embodiment of this application. In this example, the method for testing a TDEC includes the following steps.

301: Obtain a to-be-tested signal.

In this embodiment, a signal transmitted by a transmitter is referred to as an original signal, and the transmitter may periodically and repeatedly send the original signal. The original signal is an optical signal obtained by modulating a generated test sequence by the transmitter. A manner of modulating the test sequence includes but is not limited to 4-order pulse amplitude modulation (4-order Pulse amplitude modulation, PAM-4), 2-order pulse amplitude modulation (2-order Pulse amplitude modulation, PAM-2), and the like. The PAM-2 may also be referred to as OOK. For example, the test sequence may be a short stress pattern random quaternary (short stress pattern random quaternary, SSPRQ), and an SSPRQ pattern is one of PAM-4 patterns. It should be understood that the SSPRQ is formed by splicing and encoding four patterns that are selected from a conventional PRBS31 pattern and that have great pressure on the transmitter, and a length of the SSPRQ is $2^{16}$-1. Advantages of the SSPRQ are that enough pressure can be applied to the tested transmitter, so that this case is closer to testing performance of the tested transmitter in a real service, and the SSPRQ has a feature of a short pattern, so that a sampling oscilloscope can capture an entire pattern for signal processing such as equalization. Refer to descriptions in FIG. 2. The original signal transmitted by the transmitter is received by a TDEC test receiver through channel transmission, and a front end of the TDEC test receiver processes the signal, and then transmits, to a processor, a signal obtained through processing, where the signal received by the processor is referred to as the to-be-tested signal.

302: Perform equalization processing on the to-be-tested signal.

This application provides a target equalizer, configured to perform equalization processing on the to-be-tested signal. Specifically, the target equalizer includes a feed forward equalizer (Feed forward equalizer, FFE) and a decision feedback equalizer (Decision feedback equalizer, DFE). For ease of description, in this application, equalization processing performed by the FFE is referred to as first equalization processing, and a tap coefficient of the FFE is referred to as a first tap coefficient; and equalization processing performed by the DFE is referred to as second equalization processing, and a tap coefficient of the DFE is referred to as a second tap coefficient.

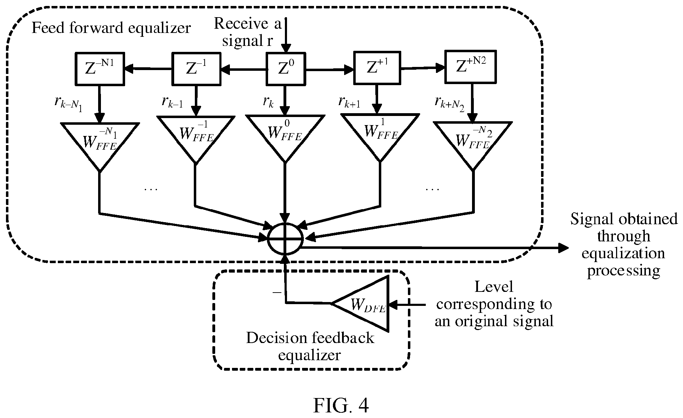

FIG. 4 is a diagram of equalization processing according to an embodiment of this application. As shown in FIG. 4, a main tap of an FFE is denoted as $r_L$, and $Z^0$ represents no delay. Front taps of the FFE are of a quantity N1, and are respectively denoted as $r_{L-N1}, ... ,$ and $r_{L-1}$, and $Z^{-N}, ..., Z^{-2}$, and $Z^1$ respectively represent delays of -1, -2, ..., and -N1 symbol periodicities. Rear taps of the FFE are of a quantity N2, and are respectively denoted as $r_{L+1}, ... ,$ and $r_{L+N2}$, and $Z^{+1}, Z^{+2}, ...,$ and $Z^{+N2}$ respectively represent delays of 1, 2, ..., and N2 symbol periodicities. Both N1 and N2 are integers greater than or equal to 0. Specific values of N1 and N2 depend on an implementation requirement, and are not limited in this application.

In an example, N1+N2=4 or 20. A first tap coefficient of the FFE is denoted as $w_{FFE}^i$ , where i is an integer between -N1 and N2. It should be understood that the FFE is at an integer interval, to be specific, a signal interval corresponding to adjacent taps in the FFE is one symbol periodicity. A quantity of taps of a DFE is 1, and a second tap coefficient of the DFE is denoted as $w_{DFE}$. It should be noted that, a difference obtained by subtracting the second tap coefficient of the DFE from a sum of all first tap coefficients of the FFE is 1, that is, $\sum_{i=-N_1}^{N_2} w_{FFE}^i - w_{DFE} = 1$.

Specifically, the FFE performs first equalization processing on a to-be-tested signal based on the first tap coefficient to obtain a first signal. For example, as shown in FIG. 4, the to-be-tested signal is denoted as r, and the FFE performs delay weighted superposition on the to-be-tested signal to obtain a signal $\sum_{i=-N_1}^{N_2} w_{FFE}^i \times r_{L+i}$. Delay amounts are respectively $-N_1, \ldots, -1, 0, 1, \ldots,$ and $N_2$ symbol periodicities, and a weight is the first tap coefficient of the FFE, namely, $w_{FFE}^i$. The DFE calculates a product of a level d[L-1] corresponding to an original signal and the second tap coefficient $w_{DFE}$, that is, obtains an estimation of inter-symbol interference delayed in time, and performs second equalization processing on the first signal based on the product to obtain a second signal. The second signal is a signal output by performing equalization processing by a target equalizer. In an example, the DFE obtains, by calculating the product of d[L-1] and $w_{DFE}$, the inter-symbol interference (Inter-symbol interference, ISI) delayed in the time, and further performs ISI elimination on the first signal to obtain the second signal. It should be understood that the level corresponding to the original signal is represented as $P_{ave} + \frac{OMA_{outer}}{M-1}(i - \frac{M+1}{2})$, where $P_{ave}$ represents average optical power of an eye pattern, $OMA_{outer}$ represents an outer optical modulation amplitude of the second signal, $1 \leq i \leq M$, M represents a quantity of level values of the original signal, and $M \geq 2$. For example, if M=2, the original signal uses PAM-2; or if M=4, the original signal uses PAM-4.

It should be noted that the transmitter and the TDEC test receiver may agree on a test sequence used by the original signal, so that the DFE calculates the product of the level d[L-1] corresponding to the original signal and the second tap coefficient $w_{DFE}$. It should be understood that the equalization processing performed by the DFE provided in this application is different from a conventional method for performing equalization processing by a DFE. Impact of DFE error propagation is not considered, and the DFE provided in this application estimates the ISI by using the original signal instead of a decision feedback symbol. The DFE error propagation is explained as follows: The DFE calculates the ISI based on a symbol output through decision and performs equalization based on a calculation result. Once the symbol output through decision is erroneous, the DFE calculates the ISI erroneously based on the erroneously decided symbol, and cannot correctly eliminate the ISI. Consequently, a probability of an error decision of a symbol at a next moment is increased. This phenomenon that an erroneous symbol causes an error in a subsequent symbol is referred to as error propagation.

303: Obtain an eye pattern of a signal obtained through the equalization processing, and perform sampling at a target position of the eye pattern.

In an example, a method for calculating a xUI sampling point of an $L^{th}$ symbol within a periodicity is as the following formula (1):

$$Eq(r_{L,x}) = \sum_{i=-N_1}^{N_2} w_{FFE}^i \times r_{L+i,x} - w_{DFE} \times d[L-1]$$

$r_{L,x}$ represents a value of the xUI sampling point of the received $L^{th}$ symbol within the periodicity, $0<x<1$, and d[L-1] is a level corresponding to an $(L-1)^{th}$ symbol of the original signal. An example in which the original signal uses the PAM-4 is used. Four levels corresponding to the original signal are sequentially $P_{ave} - \frac{OMA_{outer}}{2}$, $P_{ave} - \frac{OMA_{outer}}{6}$, $P_{ave} + \frac{OMA_{outer}}{6}$, and $P_{ave} + \frac{OMA_{outer}}{2}$ in ascending order.

In this embodiment, an eye pattern of the second signal obtained through the equalization processing is sampled to obtain a third signal. For example, a position of an inter-symbol crosspoint is first found based on average optical power, and the target position for the sampling is further determined. In an example, the target position of the eye pattern includes a $(0.5 - \frac{\Delta}{2})$ unit interval (Unit interval, UI) and a $(0.5 + \frac{\Delta}{2})$ UI. $\Delta$ is an interval between two groups of samples, is at a unit of UI, has a value ranging from 0 to 1, and is usually about 0.1. It should be noted that a sampling moment may also be adjusted slightly herein to minimize the TDEC, but an interval of a $\Delta$ UI needs to be ensured. For example, the sampling is performed at a ($0.49 - \frac{\Delta}{2}$) UI and a ($0.49 + \frac{\Delta}{2}$) UI as adjusted. It should be understood that a horizontal width of each sampling window is a δ UI, 0<δ<0.5, and δ is usually about 0.04. For a vertical width, it needs to be ensured that the window includes a boundary of a waveform. A purpose of the sampling is to obtain two groups of level histograms, superpose target noise on the two groups of level histograms, and then separately analyze TDEC performance. One with poorer performance is a final TDEC indicator.

304: Estimate an initial symbol error rate (Symbol error ratio, SER) obtained by superposing the target noise.

In this embodiment, the initial SER obtained by iterating the target noise to the third signal needs to be first determined, and the initial SER is further modified to obtain a target SER. It should be understood that the initial SER is a SER without consideration of the impact of the DFE error propagation, and the target SER is a SER in consideration of the impact of the DFE error propagation. It should be noted that, in this application, a bit error rate (Bit error ratio, BER) may alternatively be used to replace the SER for representation, and the SER and the BER may be converted into each other. A person skilled in the art may know a specific manner, and details are not described herein.

The following describes a specific implementation of determining the initial SER by using an example in which the original signal uses the PAM-4.

A decision threshold of a lower eye in the eye pattern is denoted as $P_{th1}$, a decision threshold of a middle eye in the eye pattern is denoted as $P_{th2}$, and a decision threshold of an upper eye in the eye pattern is denoted as $P_{th3}$. $P_{th1}$, $P_{th2}$, and $P_{th3}$ satisfy the following formula (2):

$$P_{th1} = P_{ave} - \frac{OMA_{outer}}{3}$$

$$P_{th2} = P_{ave}$$

$$P_{th3} = P_{ave} + \frac{OMA_{outer}}{3}$$

Levels sampled at the ($0.5 - \frac{\Delta}{2}$) UI and the ($0.5 + \frac{\Delta}{2}$) UI are normalized. Values of the levels are grouped into a plurality of ranges, an interval is $\Delta y$, a center of each range is $y_i$, and frequencies $F(y_i)$ of the ranges are calculated. It is clear that a sum of the frequencies of different intervals is 1. For two groups of the levels sampled at the ($0.5 - \frac{\Delta}{2}$) UI and sampled at the ($0.5 + \frac{\Delta}{2}$) UI, cumulative probability functions for the eyes are calculated, and are respectively denoted as $CF_{L1}(y_i)$, $CF_{L2}(y_i)$, $CF_{L3}(y_i)$, $CF_{R1}(y_i)$, $CF_{L2}(y_i)$, and $CF_{R3}(y_i)$, where L represents the sampling on a left side (namely, at the ($0.5 - \frac{\Delta}{2}$) UI), R represents the sampling on a right side (namely, at the ($0.5 + \frac{\Delta}{2}$) UI), and subscript symbols 1, 2, and 3 respectively represent the lower eye, the middle eye, and the upper eye. A specific calculation manner is described by using $CF_{L1}(y_i)$ as an example. A calculation manner of another eye is similar, and $CF_{L1}(y_i)$ satisfies the following formula (3):

$$CF_{L1}(y_i) = \begin{cases} \sum_{y=P_{th1}}^{y_i} F(y) \text{ for } y_i \geq P_{th1} \\ \sum_{y=y_i}^{P_{th1}} F(y) \text{ for } y_i < P_{th1} \end{cases}$$

y represents a sampling level value of the third signal, F(y) represents a frequency distribution function of the sampling levels of the third signal, and $y_i$ is a representation of discretized y.

Then, $SER_{L1}$ of the lower eye is obtained through calculation by superimposing the target noise on the signal sampled at the ($0.5 - \frac{\Delta}{2}$) UI. A specific method is: multiplying each element of the cumulative probability function $CF_{L1}(y_i)$ by $G_{th1}(y_i)$ and then performing summation, to obtain $SER_{L1}$. Similarly, $SER_{L2}$ and $SER_{L3}$ are obtained, and a sum of $SER_{L1}$, $SER_{L2}$, and $SER_{L3}$ is $SER_L$. In the same way, $SER_R$ obtained by superimposing the noise on the level sampled at the ($0.5 + \frac{\Delta}{2}$) UI may be calculated. $G_{th1}(y_i)$ is equivalent to a Gaussian probability density function using a root mean square (root mean square, RMS) value of the target noise, and has a center located at the lower eye threshold $P_{th1}$. $G_{th1}(y_i)$ satisfies the following formula (4): or

$$G_{th1}(y_i) = \int_{y_i - \frac{\Delta y}{2}}^{y_i + \frac{\Delta y}{2}} \frac{1}{C_{eq}\sigma_G\sqrt{2\pi}} \times e^{-(\frac{y - P_{th1}}{C_{eq}\sigma_G\sqrt{2}})^2} dy$$

$$G_{th1}(y_i) = \frac{1}{C_{eq}\sigma_G\sqrt{2\pi}} \times e^{-(\frac{y_i - P_{th1}}{C_{eq}\sigma_G\sqrt{2}})^2} \times \Delta y$$

$\sigma_G$ represents the RMS value of the target noise, $C_{eq}$ represents a coefficient of noise enhancement through the first equalization processing and the second equalization processing, and $\Delta y$ represents an interval between two adjacent $y_i$. Similarly, $G_{th2}(y_i)$ and $G_{th3}(y_i)$ may be obtained through calculation in a manner similar to Formula (4). A calculation method of $C_{eq}$ is a product of normalized noise power spectral density $N(f)$ at an input of a reference equalizer and a normalized frequency response $H_{eq}(f)$ of the reference equalizer, and $C_{eq}$ satisfies the following formula (5):

$$C_{eq} = \sqrt{\int N(f) \times |H_{eq}(f)|^2 df}$$

N(f) is a normalized noise power spectrum obtained by filtering white noise via a filter. N(f) satisfies the following formula (6):

$$\int N(f)df = H_{eq}(f = 0) = 1$$

305: Modify the initial SER to obtain the target SER.

In this embodiment, the target SER may be obtained by multiplying the initial SER by a modification factor $f_{modify}$. The modification factor $f_{modify}$ may be considered as a SER increase multiple caused by the DFE error propagation. It should be understood that, for the signal sampled at the ($0.5 - \frac{\Delta}{2}$) UI and the signal sampled at the ($0.5 + \frac{\Delta}{2}$) UI, two initial SERs may be modified in the same calculation manner to obtain two target SERs, and a larger one of the two target SERs is selected as a final target SER. For example, a modification factor corresponding to the signal sampled at the ($0.5 - \frac{\Delta}{2}$) UI may be denoted as $f^L_{modify}$. For another example, a modification factor corresponding to the signal sampled at the ($0.5 + \frac{\Delta}{2}$) UI may be denoted as $f^R_{modify}$. For ease of description, $f_{modify}$ is uniformly used to represent the modification factor below, and L and R are not distinguished.

The following describes several specific calculation manners of the modification factor.

In a first calculation manner of the modification factor $f_{modify}$, the modification factor $f_{modify}$ satisfies the following formula (7):

$$f_{modify} = \frac{1}{1 - (P_E - SER_0)}$$

$SER_0$ represents the initial SER, and $P_E$ represents a SER obtained through the second equalization processing due to a decision error of a second symbol that is based on an erroneously decided first symbol, where the first symbol is received by the TDEC test receiver before the second symbol. That is, because the symbol is erroneously decided currently, and the DFE equalizer performs erroneous ISI elimination, a probability of error decision of a symbol at a next moment is denoted as $P_E$.

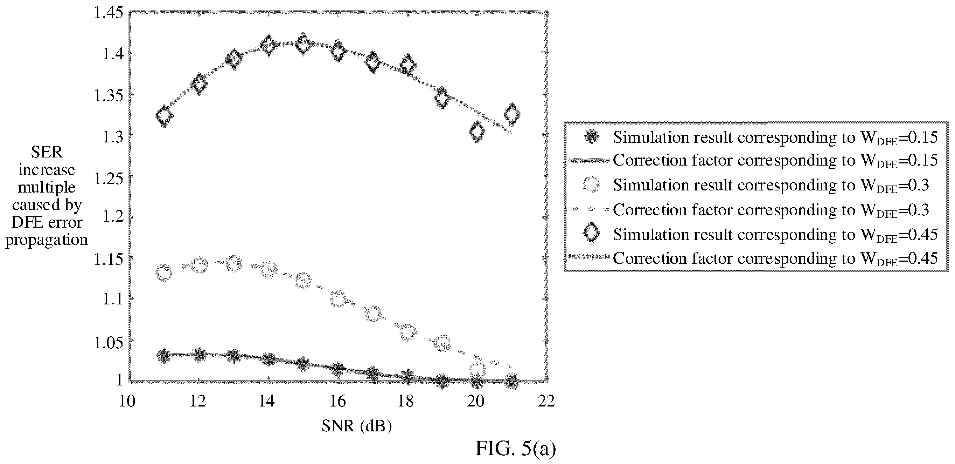

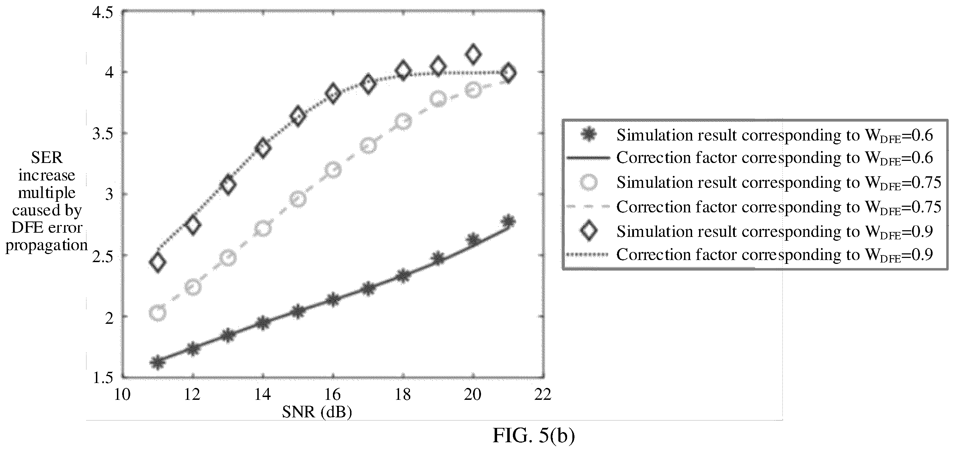

FIG. 5(a) is a diagram of a first estimation effect of a SER increase multiple caused by DFE error propagation. FIG. 5(b) is a diagram of a second estimation effect of a SER increase multiple caused by DFE error propagation. As shown in FIG. 5(a) and FIG. 5(b), a horizontal coordinate represents a signal-to-noise ratio (Signal-to-noise ratio, SNR), and a vertical coordinate represents the SER increase multiple caused by the DFE error propagation. FIG. 5(a) and FIG. 5(b) both show a comparison between modification factors $f_{modify}$ obtained through calculation and simulation results of SER increase multiples caused by the DFE error propagation under different value conditions of $w_{DFE}$. It can be learned that the modification factors $f_{modify}$ obtained in the first calculation manner are basically the same as the simulation results. The simulation results of the SER increase multiples caused by the DFE error propagation may be specifically calculated by using a Monte Carlo method.

In a second calculation manner of the modification factor $f_{modify}$, if a degree of linearity of the transmitter is good, noise levels are evenly distributed, and a BER threshold requirement is low, the modification factor $f_{modify}$ satisfies the following formula (8):

$$f_{modify} = \frac{1}{1 - P_E}$$

It should be understood that, the second calculation manner of the modification factor $f_{modify}$ has lower calculation complexity, but has a requirement on an application scope, and is usually applicable only to a case in which the BER threshold is below a -3 order of magnitude.

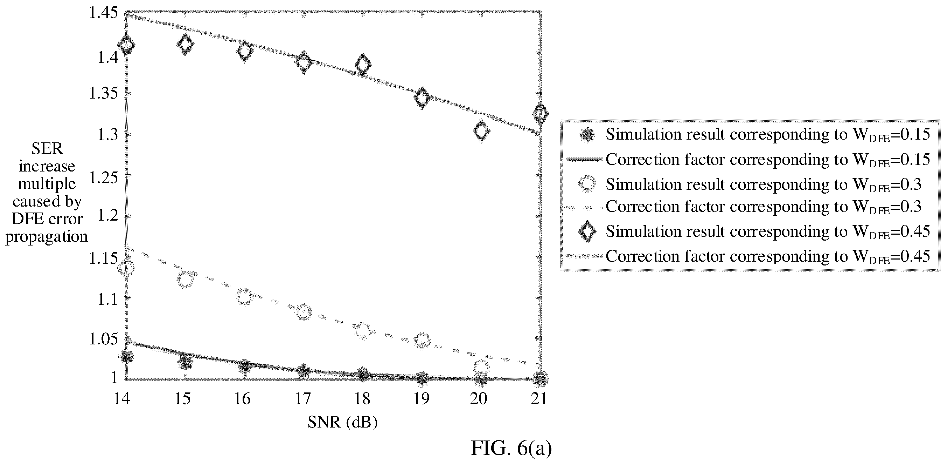

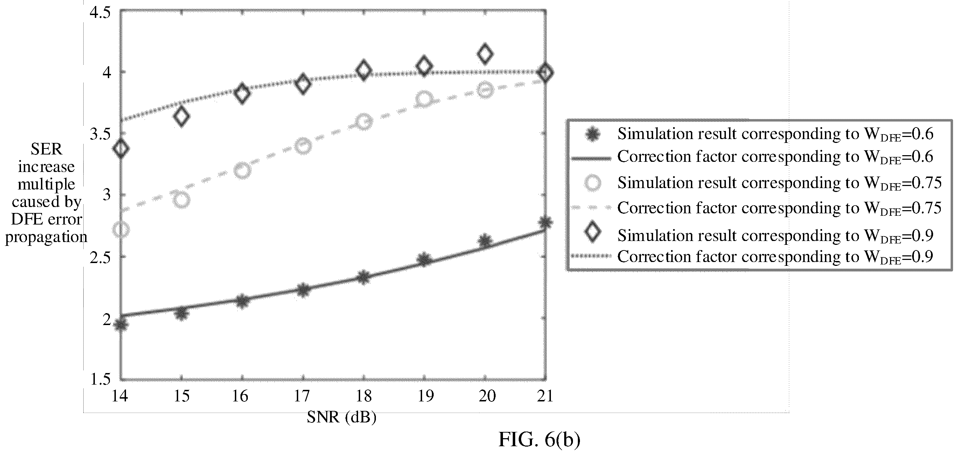

FIG. 6(a) is a diagram of a third estimation effect of a SER increase multiple caused by DFE error propagation. FIG. 6(b) is a diagram of a fourth estimation effect of a SER increase multiple caused by DFE error propagation. As shown in FIG. 6(a) and FIG. 6(b), a horizontal coordinate represents an SNR, and a vertical coordinate represents the SER increase multiple caused by the DFE error propagation. FIG. 6(a) and FIG. 6(b) both show a comparison between modification factors $f_{modify}$ obtained through calculation and simulation results of SER increase multiples caused by the DFE error propagation under different value conditions of $w_{DFE}$. It can be learned that the modification factors $f_{modify}$ obtained in the second calculation manner are basically the same as the simulation results. The simulation results of the SER increase multiples caused by the DFE error propagation may be specifically calculated by using a Monte Carlo method.

It should be noted that, $P_E$ is determined by the second tap coefficient $w_{DFE}$ of the DFE, the RMS value $\sigma_G$ of the target noise, and a sampling level-related parameter. It should be understood that the target noise is in Gaussian distribution, and the RMS value of the target noise is denoted as $\sigma_G$. The sampling level-related parameter includes at least one of frequency distribution of the sampling levels of the third signal, the average optical power of the eye pattern, and the outer optical modulation amplitude of the second signal. This application provides a plurality of specific calculation manners of $P_E$, which are separately described below.

In a first calculation manner of $P_E$, $P_E$ satisfies the following formula (9):

$$P_E = \sum_{i=1}^{K} P_E^k$$

K is a quantity of eyes in the eye pattern, $P_E^k$ represents a SER that is when the second symbol is erroneously decided at a $k^{th}$ eye, and $1 \le k \le K$. An example in which the original signal uses the PAM-4 is used. K=3, and the eye pattern includes the lower eye, the middle eye, and the upper eye. k=1, 2, or 3, and values of k respectively correspond to the lower eye, the middle eye, and the upper eye.

Further, $P_E^k$ satisfies the following formula (10):

$$P_E^k = (\int CF_k(y)G_{thk}^{shift+}(y)dy + \int CF_k(y)G_{thk}^{shift-}(y)dy)/2$$

$CF_k(y)$ represents a cumulative probability function of level distribution corresponding to the $k^{th}$ eye, $G_{thk}^{shift+}(y)$ represents a probability density function of superimposed noise obtained by offsetting a decision threshold of the $k^{th}$ eye in a first direction, and $G_{thk}^{shift-}(y)$ represents a probability density function of superimposed noise obtained by offsetting the decision threshold of the $k^{th}$ eye in a second direction, the first direction is opposite to the second direction, and y represents a sampling level value of the third signal.

Further, $CF_k(y)$ satisfies the following formula (11):

$$CF_k(y_i) = \begin{cases} \sum_{y=P_{thk}}^{y_i} F(y) & \text{for } y_i \geq P_{thk} \\ \sum_{y=y_i}^{P_{thk}} F(y) & \text{for } y_i < P_{thk} \end{cases}$$

$P_{thk}$ is a decision threshold of the $k^{th}$ eye, $F(y)$ represents the frequency distribution function of the sampling levels of the third signal, and $y_i$ is the representation of discretized y. $G_{thk}^{shift+}(y)$ and $G_{thk}^{shift-}(y)$ satisfy the following formula (12):

$$G_{thk}^{shift+}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{thk}+w_{DFE}\times\frac{OMA_{outer}}{K})}{C_{eq}\sigma_G\sqrt{2}})^2} dy$$

$$G_{thk}^{shift-}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{thk}-w_{DFE}\times\frac{OMA_{outer}}{K})}{C_{eq}\sigma_G\sqrt{2}})^2} dy$$

$w_{DFE}$ represents the second tap coefficient, $OMA_{outer}$ represents the outer optical modulation amplitude of the second signal, $C_{eq}$ represents a coefficient of noise enhancement through the first equalization processing and the second equalization processing, $\sigma_G$ represents the RMS value of the target noise, and $\Delta y$ represents an interval between two adjacent $y_i$. It should be understood that $w_{DFE} \times \frac{OMA_{outer}}{K}$ represents an offset value of a level offset that is of the second symbol and that is caused by the DFE error propagation. This is equivalent to a case in which a decision threshold is offset while a level position remains unchanged.

It should be noted that the foregoing first calculation manner of $P_E$ is applicable to different scenarios in which the original signal uses the PAM-4, the PAM-2, or the like.

In an example, in the scenario in which the original signal uses the PAM-4, $P_E$ includes three SER components respectively corresponding to a lower eye error, a middle eye error, and an upper eye error, that is, K=3, and k=1, 2, or 3. $P_E = P_E^1 + P_E^2 + P_E^3$, where $P_E^1$, $P_E^2$, and $P_E^3$ respectively represent the three SER components. The lower eye is used as an example. $G_{th1}^{shift+}(y)$ represents a probability density function of superimposed noise obtained by offsetting a decision threshold of the lower eye in the first direction, and $G_{th1}^{shift-}(y)$ represents a probability density function of superimposed noise obtained by offsetting the decision threshold of the lower eye in the second direction. $G_{th1}^{shift+}(y)$ and $G_{th1}^{shift-}(y)$ satisfy the following formula (13):

$$G_{th1}^{shift+}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{th1}+w_{DFE}\times\frac{OMA_{outer}}{3})}{C_{eq}\sigma_G\sqrt{2}})^2} dy$$

$$G_{th1}^{shift-}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{th1}-w_{DFE}\times\frac{OMA_{outer}}{3})}{C_{eq}\sigma_G\sqrt{2}})^2} dy$$

Alternatively, $G_{th1}^{shift+}(y)$ and $G_{th1}^{shift-}(y)$ satisfy the following formula (14):

$$G_{th1}^{shift+}(y_i) = \frac{1}{C_{eq}\sigma_G\sqrt{2\pi}} \times e^{-(\frac{y_i-(P_{th1}+w_{DFE}\times\frac{OMA_{outer}}{3})}{C_{eq}\sigma_G\sqrt{2}})^2} \times \Delta y$$

$$G_{th1}^{shift-}(y_i) = \frac{1}{C_{eq}\sigma_G\sqrt{2\pi}} \times e^{-(\frac{y_i-(P_{th1}-w_{DFE}\times\frac{OMA_{outer}}{3})}{C_{eq}\sigma_G\sqrt{2}})^2} \times \Delta y$$

In another example, in the scenario in which the original signal uses the PAM-2, an eye pattern of a PAM-2 signal includes only one eye, and therefore $P_E$ does not have a plurality of SER components. The eye in the eye pattern is used as an example. $G_{th}^{shift+}(y)$ represents a probability density function of superimposed noise obtained by offsetting a decision threshold of the eye in the first direction, and $G_{th}^{shift-}(y)$ represents a probability density function of superimposed noise obtained by offsetting the decision threshold of the eye in the second direction. $G_{th}^{shift+}(y)$ and $G_{th}^{shift-}(y)$ satisfy the following formula (15):

$$G_{th}^{shift+}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{th}+w_{DFE}\times OMA_{outer})}{C_{eq}\sigma_G\sqrt{2}})^2} dy$$

$$G_{th}^{shift-}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{th}-w_{DFE}\times OMA_{outer})}{C_{eq}\sigma_G\sqrt{2}})^2} dy$$

Alternatively, $G_{th}^{shift+}(y)$ and $G_{th}^{shift-}(y)$ satisfy the following formula (16):

$$G_{th}^{shift+}(y_i) = \frac{1}{C_{eq}\sigma_G\sqrt{2\pi}} \times e^{-(\frac{y_i-(P_{th}+w_{DFE}\times OMA_{outer})}{C_{eq}\sigma_G\sqrt{2}})^2} \times \Delta y$$

$$G_{th}^{shift-}(y_i) = \frac{1}{C_{eq}\sigma_G\sqrt{2\pi}} \times e^{-(\frac{y_i-(P_{th}-w_{DFE}\times OMA_{outer})}{C_{eq}\sigma_G\sqrt{2}})^2} \times \Delta y$$

In a second calculation manner of $P_E$, $P_E$ satisfies the following formula (17):

$$P_E = \begin{cases} 0.5 \times erfc(\frac{1-2w_{DFE}}{\sqrt{2}} \times \sqrt{\frac{3 \times SNR}{(M+1)\times(M-1)}}) \times (1-\frac{1}{M}), w_{DFE} \leq 0.5 \\ (1-0.5 \times erfc(\frac{2w_{DFE}-1}{\sqrt{2}} \times \sqrt{\frac{3 \times SNR}{(M+1)\times(M-1)}})) \times (1-\frac{1}{M}), 0.5 < w_{DFE} \leq 1 \end{cases}$$

erfc represents a complementary error function (complementary error function), the SNR represents a signal-to-noise ratio obtained by superimposing the target noise on the third signal, $w_{DFE}$ represents the second tap coefficient, M represents the quantity of level values of the original signal, and M≥2. It should be understood that

$$erfc(x) = \frac{2}{\sqrt{\pi}}\int_x^\infty e^{-\eta^2}d\eta$$ .

Further, the SNR satisfies the following formula (18):

$$SNR = \frac{P_{sig}}{\sum_{y_i} F(y_i) \times (y_i - P_{ave})^2 - P_{sig} + \sigma_G{}^2}$$

$P_{sig}$ represents power of a signal component without noise and distortion in the third signal, $y_i$ is a representation of a discretized sampling level value of the third signal, $P_{ave}$ represents the average optical power of the eye pattern, and $\sigma_G$ represents the RMS value of the target noise.

Further, $P_{sig}$ satisfies the following formula (19):

$$P_{sig} = \frac{(M+1)\times(M-1)}{3} \times (\frac{OMA_{outer}}{2 \times (M-1)})^2$$

$OMA_{outer}$ represents the outer optical modulation amplitude of the second signal, M represents the quantity of level values of the original signal, and M≥2.

It should be noted that the foregoing described two calculation manners of $P_E$ is applicable to any one of the foregoing described calculation manners of the modification factor $f_{modify}$, and the modification factor $f_{modify}$ obtained through calculation is accurate and reliable. Details may be specifically shown in FIG. 5(a) or FIG. 6(b). In addition, compared with the first calculation manner of $P_E$, the second calculation manner of $P_E$ reduces calculation complexity. However, when the degree of linearity of the transmitter is poor, and the noise levels are not evenly distributed, an error in estimating the SER increase multiple in the second calculation manner of $P_E$ is greater than that in the first calculation manner of $P_E$.

306: Determine whether the target SER is equal to a SER threshold. If the target SER is not equal to the SER threshold, perform step 307; or if the target SER is equal to the SER threshold, perform step 308.

It should be noted that a specific value of the SER threshold depends on actual application, and is not limited in this application.

307: Adjust the target noise.

If the target SER is not equal to the SER threshold, the target noise superimposed on the third signal needs to be adjusted, so that the target SER is re-determined according to the foregoing step 305, to cause a newly determined target SER to be equal to the SER threshold. For example, if the current target SER is greater than the SER threshold, the target noise superimposed on the third signal is reduced. For another example, if the current target SER is less than the SER threshold, the target noise superimposed on the third signal is increased.

It should be noted that, if the target noise is adjusted, the first tap coefficient and the second tap coefficient also change. In a possible implementation, the first tap coefficient and the second tap coefficient may be iterated based on adjusted target noise, to determine an optimal first tap coefficient and an optimal second tap coefficient. For example, if the SER of the second signal output through the equalization processing is the smallest, a first tap coefficient and a second tap coefficient in this state are optimal.

308: Calculate the TDEC based on the adjusted target noise.

If the target SER is equal to the SER threshold, the TDEC is calculated based on the currently determined target noise. Specifically, total RMS noise is first calculated, and the RMS noise satisfies the following formula (20):

$$R = \sqrt{\sigma_G{}^2 + \sigma_S{}^2}$$

R represents the total RMS noise, $\sigma_g$ is the RMS value of the target noise, and $\sigma_S$ is a noise standard deviation of background noise of the TDEC test receiver.

Further, the PAM-4 is used as an example. The TDEC satisfies the following formula (21):

$$TDEC = 10\log_{10}(\frac{OMA_{outer}}{6} \times \frac{1}{Q_t R})$$

Further, based on a specific bit error threshold, Qt satisfies the following formula (22):

$$Q_t = erfc^{-1}(\frac{8}{3} \times BER) \times \sqrt{2}$$

erfc represents the complementary error function, and BER represents a BER obtained by superimposing the target noise on the third signal.

The following lists several typical Qt values corresponding to the BER threshold, as shown in Table 1 below. It should be understood that, the BER threshold may be selected from Table 1 below based on an actual requirement and converted to obtain the SER threshold mentioned in step 306 above.

Table 1

| BER threshold | 2.4e-4 | 2e-3 | 4.5e-3 | 6e-3 | 8.5e-3 | 1.1e-2 |
|---|---|---|---|---|---|---|
| $Q_t$ | 3.414 | 2.786 | 2.512 | 2.409 | 2.279 | 2.179 |

It can be learned from the foregoing descriptions that, in this application, the DFE is added to the TDEC test receiver, to improve an equalization capability, so that a high baud rate system is better supported. In addition, this application provides a method for estimating a target SER obtained through equalization processing. DFE error propagation is not first considered, and a DFE performs equalization processing by using the original signal, to obtain an initial SER without consideration of the error propagation of the DFE, and then calculates a modification factor and modifies the initial SER based on the modification factor to obtain the target SER. It should be understood that the modification factor may be considered as a SER increase multiple caused by the DFE error propagation, so that a real estimation of the SER obtained through the DFE equalization processing can be obtained. In this manner, under a condition in which a length of a test sequence of the original signal is limited, low operational complexity of estimating the SER is implemented, so that a scenario with severe signal impairment is better applied.

The foregoing describes the method for testing a TDEC provided in this embodiment of this application. The following describes a TDEC test receiver provided in an embodiment of this application.

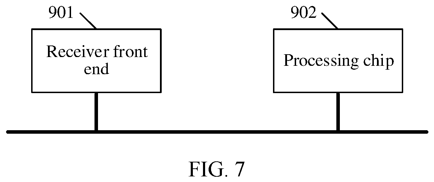

FIG. 7 is a diagram of a structure of a TDEC test receiver according to an embodiment of this application. As shown in FIG. 7, the TDEC test receiver includes a receiver front end 901 and a processing chip 902. The receiver front end 901 and the processing chip 902 are connected to each other through a line. The receiver front end 901 is configured to: convert a received optical signal into an electrical signal, and transmit the electrical signal to the processing chip 902. The processing chip 902 is configured to perform method steps in the embodiment shown in FIG. 3. In a possible implementation, the receiver front end 901 includes the polarization rotator 10, the optical splitter 20, the tunable reflector 30, the test fiber 40, the photoelectric conversion unit 50, the clock recovery unit 60, and the oscilloscope 70 shown in FIG.

2. For details, refer to related descriptions in FIG. 2. Details are not described herein again.

An embodiment of this application further provides a processing chip. A processor and one or more interfaces that are configured to implement the method steps in the embodiment shown in FIG. 3 are integrated into the processing chip. When a memory is integrated into the processing chip, the processing chip may complete the method steps in any one or more of the foregoing embodiments. When no memory is integrated into the processing chip, the digital processing chip may be connected to an external memory through an interface. The processing chip implements, based on program code stored in the external memory, actions performed by the receiver in the foregoing embodiments.

A person of ordinary skill in the art may understand that all or some of the steps in the foregoing embodiments may be implemented through hardware or a program instructing related hardware. The program may be stored in a computer-readable storage medium. The storage medium above may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk Solid State Disk (SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for testing a transmitter and dispersion eye closure penalty TDEC, comprising:

obtaining a to-be-tested signal, wherein the to-be-tested signal is a signal obtained through channel transmission of an original signal transmitted by a transmitter;
performing first equalization processing on the to-be-tested signal based on at least one first tap coefficient to obtain a first signal;
obtaining a product of a level corresponding to the original signal and a second tap coefficient, and performing second equalization processing on the first signal based on the product to obtain a second signal, wherein a difference obtained by subtracting the second tap coefficient from a sum of all the first tap coefficients is 1;
obtaining an eye pattern of the second signal, and performing sampling at a target position of the eye pattern to obtain a third signal;
obtaining a target symbol error rate SER obtained by superimposing target noise on the third signal; and
adjusting the target noise to adjust the target SER, for calculating the TDEC based on adjusted target noise if the target SER is equal to a SER threshold.

2. The method according to claim 1, wherein the obtaining a target SER obtained by superimposing target noise on the third signal comprises:

obtaining an initial SER obtained by superimposing the target noise on the third signal; and

modifying the initial SER based on a modification factor to obtain the target SER.

3. The method according to claim 2, wherein the modifying the initial SER based on a modification factor to obtain the target SER comprises:
multiplying the initial SER by the modification factor to obtain the target SER.

4. The method according to claim 2 or 3, wherein the modification factor satisfies the following formula 1:

$$f_{modify} = \frac{1}{1 - (P_E - SER_0)}$$

wherein $f_{modify}$ represents the modification factor, $SER_0$ represents the initial SER, $P_E$ represents a SER obtained through the second equalization processing due to a decision error of a second symbol that is based on an erroneously decided first symbol, and a receiving moment of the first symbol is earlier than a receiving moment of the second symbol.

5. The method according to claim 2 or 3, wherein the modification factor satisfies the following formula 2:

$$f_{modify} = \frac{1}{1 - P_E}$$

wherein $f_{modify}$ represents the modification factor, $P_E$ represents a SER obtained through the second equalization processing due to a decision error of a second symbol that is based on an erroneously decided first symbol, and a receiving moment of the first symbol is earlier than a receiving moment of the second symbol.

6. The method according to claim 4 or 5, wherein $P_E$ is determined by the second tap coefficient, a root mean square RMS value of the target noise, and a sampling level-related parameter, and the sampling level-related parameter comprises at least one of frequency distribution of sampling levels of the third signal, average optical power of the eye pattern, and an outer optical modulation amplitude of the second signal.

7. The method according to any one of claims 4 to 6, wherein $P_E$ satisfies the following formula 3:

$$P_E = \sum_{i=1}^{K} P_E^k$$

wherein K is a quantity of eyes in the eye pattern, $P_E^k$ represents a SER that is when the second symbol is erroneously decided at a $k^{th}$ eye, and $1 \leq k \leq K$.

8. The method according to claim 7, wherein $P_E^k$ satisfies the following formula 4:

$$P_E^k = (\int CF_k(y)G_{thk}^{shift+}(y)dy + \int CF_k(y)G_{thk}^{shift-}(y)dy)/2$$

wherein $CF_k(y)$ represents a cumulative probability function of level distribution corresponding to the $k^{th}$ eye, $G_{thk}^{shift+}(y)$ represents a probability density function of superimposed noise obtained by offsetting a decision threshold of the $k^{th}$ eye in a first direction, and $G_{thk}^{shift-}(y)$ represents a probability density function of superimposed noise obtained by offsetting the decision threshold of the $k^{th}$ eye in a second direction, the first direction is opposite to the second direction, and y represents a sampling level value of the third signal.

9. The method according to claim 8, wherein $CF_k(y)$ satisfies the following formula 5:

$$CF_k(y_i) = \begin{cases} \sum_{y=P_{thk}}^{y_i} F(y) \text{ for } y_i \geq P_{thk} \\ \sum_{y=y_i}^{P_{thk}} F(y) \text{ for } y_i < P_{thk} \end{cases}$$

wherein $P_{thk}$ represents the decision threshold of the $k^{th}$ eye, $F(y)$ represents a frequency distribution function of the sampling levels of the third signal, and $y_i$ is a representation of discretized y; and

$$G_{thk}^{shift+}(y) \text{ and } G_{thk}^{shift-}(y)$$ satisfy the following formula 6:

$$G_{thk}^{shift+}(y_i) = \int_{y_i - \frac{\Delta y}{2}}^{y_i + \frac{\Delta y}{2}} \frac{1}{C_{eq}\sigma_G\sqrt{2\pi}} \times e^{-(\frac{y-(P_{thk}+w_{DFE}\times\frac{OMA_{outer}}{K})}{C_{eq}\sigma_G\sqrt{2}})^2} dy$$

$$G_{thk}^{shift-}(y_i) = \int_{y_i - \frac{\Delta y}{2}}^{y_i + \frac{\Delta y}{2}} \frac{1}{C_{eq}\sigma_G\sqrt{2\pi}} \times e^{-(\frac{y-(P_{thk}-w_{DFE}\times\frac{OMA_{outer}}{K})}{C_{eq}\sigma_G\sqrt{2}})^2} dy$$

wherein $w_{DFE}$ represents the second tap coefficient, $OMA_{outer}$ represents the outer optical modulation amplitude of the second signal, $C_{eq}$ represents a coefficient of noise enhancement through the first equalization processing and the second equalization processing, $\sigma_G$ represents the RMS value of the target noise, and $\Delta y$ represents an interval between two adjacent $y_i$.

10. The method according to any one of claims 4 to 6, wherein $P_E$ satisfies the following formula 7:

$$P_E = \begin{cases} 0.5 \times erfc(\frac{1 - 2w_{DFE}}{\sqrt{2}} \times \sqrt{\frac{3 \times SNR}{(M+1) \times (M-1)}}) \times (1 - \frac{1}{M}), w_{DFE} \leq 0.5 \\ (1 - 0.5 \times erfc(\frac{2w_{DFE} - 1}{\sqrt{2}} \times \sqrt{\frac{3 \times SNR}{(M+1) \times (M-1)}})) \times (1 - \frac{1}{M}), 0.5 < w_{DFE} \leq 1 \end{cases}$$

wherein erfc represents a complementary error function, an SNR represents a signal-to-noise ratio obtained by superimposing the target noise on the third signal, $w_{DFE}$ represents the second tap coefficient, M represents a quantity of level values of the original signal, and $M \geq 2$.

11. The method according to claim 10, wherein the SNR satisfies the following formula 8:

$$SNR = \frac{P_{sig}}{\sum_{y_i} F(y_i) \times (y_i - P_{ave})^2 - P_{sig} + \sigma_G^2}$$

wherein $P_{sig}$ represents power of a signal component without noise and distortion in the third signal, $y_i$ is a representation of a discretized sampling level value of the third signal, $P_{ave}$ represents the average optical power of the eye pattern, and $\sigma_G$ represents the RMS value of the target noise.

**12.** The method according to claim 11, wherein $P_{sig}$ satisfies the following formula 9:

$$P_{sig} = \frac{(M+1) \times (M-1)}{3} \times (\frac{OMA_{outer}}{2 \times (M-1)})^2$$

wherein $OMA_{outer}$ represents the outer optical modulation amplitude of the second signal, M represents the quantity of level values of the original signal, and M$\geq$2.

**13.** The method according to any one of claims 1 to 12, wherein the original signal comprises a test sequence periodically sent by the transmitter.

**14.** The method according to any one of claims 1 to 13, wherein the first tap coefficient is a tap coefficient of a feed forward equalizer FFE, and the second tap coefficient is a tap coefficient of a decision feedback equalizer DFE.

**15.** The method according to any one of claims 1 to 14, wherein the target position of the eye pattern comprises a ( $0.5 - \frac{\Delta}{2}$ ) unit interval UI and a ( $0.5 + \frac{\Delta}{2}$ ) UI, and 0<$\Delta$<1.

**16.** The method according to claim 15, wherein the third signal comprises a first sub-signal and a second sub-signal, the first sub-signal is obtained through sampling at the ( $0.5 - \frac{\Delta}{2}$ ) UI of the eye pattern, and the first sub-signal is obtained through sampling at the ( $0.5 + \frac{\Delta}{2}$ ) UI of the eye pattern; and

the obtaining a target symbol error rate SER obtained by superimposing target noise on the third signal comprises:
obtaining a first SER obtained by superimposing the target noise on the first sub-signal, and obtaining a second SER obtained by superimposing the target noise on the second sub-signal; and
determining the first SER as the target SER, wherein the first SER is greater than the second SER.

**17.** The method according to any one of claims 1 to 16, wherein the original signal comprises a signal using 4-order pulse amplitude modulation PAM-4 or a signal using 2-order pulse amplitude modulation PAM-2.

**18.** The method according to any one of claims 1 to 17, wherein the level corresponding to the original signal is represented as $P_{ave} + \frac{OMA_{outer}}{M-1}(i - \frac{M+1}{2})$ , $P_{ave}$ represents the average optical power of the eye pattern, $OMA_{outer}$ represents the outer optical modulation amplitude of the second signal, 1$\leq$i$\leq$M, M represents the quantity of level values of the original signal, and M$\geq$2.

**19.** A processing chip, wherein the chip comprises a processor and a memory, the memory and the processor are connected to each other through a line, the memory stores instructions, and the processor is configured to perform the method according to any one of claims 1 to 18.

**20.** A TDEC test receiver, comprising: a receiver front end and a processing chip, wherein the receiver front end and the processing chip are connected to each other through a line, and the receiver front end is configured to: convert a received optical signal into an electrical signal, and transmit the electrical signal to the processing chip; and the processing chip is configured to perform the following steps:

obtaining a to-be-tested signal, wherein the to-be-tested signal is a signal obtained through channel transmission of an original signal transmitted by a transmitter;
performing first equalization processing on the to-be-tested signal based on at least one first tap coefficient to obtain a first signal;
obtaining a product of a level corresponding to the original signal and a second tap coefficient, and performing second equalization processing on the first signal based on the product to obtain a second signal, wherein a difference obtained by subtracting the second tap coefficient from a sum of all the first tap coefficients is 1;

obtaining an eye pattern of the second signal, and performing sampling at a target position of the eye pattern to obtain a third signal;

obtaining a target symbol error rate SER obtained by superimposing target noise on the third signal; and

adjusting the target noise to adjust the target SER, for calculating the TDEC based on adjusted target noise if the target SER is equal to the SER threshold.

21. The TDEC test receiver according to claim 20, wherein the processing chip is specifically configured to:

obtain an initial SER obtained by superimposing the target noise on the third signal; and

modify the initial SER based on a modification factor to obtain the target SER.

22. The TDEC test receiver according to claim 21, wherein the processing chip is specifically configured to: multiply the initial SER by the modification factor to obtain the target SER.

23. The TDEC test receiver according to claim 21 or 22, wherein the modification factor satisfies the following formula 1:

$$f_{modify} = \frac{1}{1 - (P_E - SER_0)}$$

wherein $f_{modify}$ represents the modification factor, $SER_0$ represents the initial SER, $P_E$ represents a SER obtained through the second equalization processing due to a decision error of a second symbol that is based on an erroneously decided first symbol, and a receiving moment of the first symbol is earlier than a receiving moment of the second symbol.

24. The TDEC test receiver according to claim 21 or 22, wherein the modification factor satisfies the following formula 2:

$$f_{modify} = \frac{1}{1 - P_E}$$

wherein $f_{modify}$ represents the modification factor, $P_E$ represents a SER obtained through the second equalization processing due to a decision error of a second symbol that is based on an erroneously decided first symbol, and a receiving moment of the first symbol is earlier than a receiving moment of the second symbol.

25. The TDEC test receiver according to claim 23 or 24, wherein $P_E$ is determined by the second tap coefficient, a root mean square RMS value of the target noise, and a sampling level-related parameter, and the sampling level-related parameter comprises at least one of frequency distribution of sampling levels of the third signal, average optical power of the eye pattern, and an outer optical modulation amplitude of the second signal.

26. The TDEC test receiver according to any one of claims 23 to 25, wherein $P_E$ satisfies the following formula 3:

$$P_E = \sum_{i=1}^{K} P_E^k$$

wherein K is a quantity of eyes in the eye pattern, $P_E^k$ represents a SER that is when the second symbol is erroneously decided at a $k^{th}$ eye, and $1 \le k \le K$.

27. The TDEC test receiver according to claim 26, wherein $P_E^k$ satisfies the following formula 4:

$$P_E^k = (\int CF_k(y)G_{thk}^{shift+}(y)dy + \int CF_k(y)G_{thk}^{shift-}(y)dy)/2$$

wherein $CF_k(y)$ represents a cumulative probability function of level distribution corresponding to the $k^{th}$ eye, $G_{thk}^{shift+}(y)$ represents a probability density function of superimposed noise obtained by offsetting a decision threshold of the $k^{th}$ eye in a first direction, and $G_{thk}^{shift-}(y)$ represents a probability density function of superimposed noise obtained by offsetting the decision threshold of the $k^{th}$ eye in a second direction, the first direction is opposite to the second direction, and y represents a sampling level value of the third signal.

**28.** The TDEC test receiver according to claim 27, wherein $CF_k(y)$ satisfies the following formula 5:

$$CF_k(y_i) = \begin{cases} \sum_{y=P_{thk}}^{y_i} F(y) \text{ for } y_i \geq P_{thk} \\ \sum_{y=y_i}^{P_{thk}} F(y) \text{ for } y_i < P_{thk} \end{cases}$$

wherein $P_{thk}$ represents the decision threshold of the $k^{th}$ eye, $F(y)$ represents a frequency distribution function of the sampling levels of the third signal, and $y_i$ is a representation of discretized y; and $G_{thk}^{shift+}(y)$ and $G_{thk}^{shift-}(y)$ satisfy the following formula 6:

$$G_{thk}^{shift+}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{thk}+w_{DFE}\times\frac{OMA_{outer}}{K})}{C_{eq}\sigma_G\sqrt{2}})^2} dy$$

$$G_{thk}^{shift-}(y_i) = \int_{y_i-\frac{\Delta y}{2}}^{y_i+\frac{\Delta y}{2}} \frac{1}{C_{eq}\sigma_G\sqrt{2\pi}} \times e^{-(\frac{y-(P_{thk}-w_{DFE}\times\frac{OMA_{outer}}{K})}{C_{eq}\sigma_G\sqrt{2}})^2} dy$$

wherein $w_{DFE}$ represents the second tap coefficient, $OMA_{outer}$ represents the outer optical modulation amplitude of the second signal, $C_{eq}$ represents a coefficient of noise enhancement through the first equalization processing and the second equalization processing, $\sigma_G$ represents the RMS value of the target noise, and $\Delta y$ represents an interval between two adjacent $y_i$.

**29.** The TDEC test receiver according to any one of claims 23 to 25, wherein $P_E$ satisfies the following formula 7:

$$P_E = \begin{cases} 0.5 \times erfc(\frac{1-2w_{DFE}}{\sqrt{2}} \times \sqrt{\frac{3 \times SNR}{(M+1) \times (M-1)}}) \times (1-\frac{1}{M}), w_{DFE} \leq 0.5 \\ (1 - 0.5 \times erfc(\frac{2w_{DFE}-1}{\sqrt{2}} \times \sqrt{\frac{3 \times SNR}{(M+1) \times (M-1)}})) \times (1-\frac{1}{M}), 0.5 < w_{DFE} \leq 1 \end{cases}$$

wherein erfc represents a complementary error function, an SNR represents a signal-to-noise ratio obtained by superimposing the target noise on the third signal, $w_{DFE}$ represents the second tap coefficient, M represents a quantity of level values of the original signal, and M≥2.

**30.** The TDEC test receiver according to claim 29, wherein the SNR satisfies the following formula 8:

$$SNR = \frac{P_{sig}}{\sum_{y_i} F(y_i) \times (y_i - P_{ave})^2 - P_{sig} + \sigma_G^2}$$

wherein $P_{sig}$ represents power of a signal component without noise and distortion in the third signal, $y_i$ is a representation of a discretized sampling level value of the third signal, $P_{ave}$ represents the average optical power of the eye pattern, and $\sigma_G$ represents the RMS value of the target noise.

**31.** The TDEC test receiver according to claim 30, wherein $P_{sig}$ satisfies the following formula 9:

$$P_{sig} = \frac{(M+1) \times (M-1)}{3} \times (\frac{OMA_{outer}}{2 \times (M-1)})^2$$

wherein $OMA_{outer}$ represents the outer optical modulation amplitude of the second signal, M represents the quantity of level values of the original signal, and M≥2.

**32.** The TDEC test receiver according to any one of claims 20 to 31, wherein the original signal comprises a test sequence periodically sent by the transmitter.

**33.** The TDEC test receiver according to any one of claims 20 to 32, wherein the first tap coefficient is a tap coefficient of a feed forward equalizer FFE, and the second tap coefficient is a tap coefficient of a decision feedback equalizer DFE.

**34.** The TDEC test receiver according to any one of claims 20 to 33, wherein the target position of the eye pattern comprises a ($0.5 - \frac{\Delta}{2}$) unit interval UI and a ($0.5 + \frac{\Delta}{2}$) UI, and 0<Δ<1.

**35.** The TDEC test receiver according to claim 34, wherein the third signal comprises a first sub-signal and a second sub-signal, the first sub-signal is obtained through sampling at the ($0.5 - \frac{\Delta}{2}$) UI of the eye pattern, and the first sub-signal is obtained through sampling at the ($0.5 + \frac{\Delta}{2}$) UI of the eye pattern; and the processing chip is specifically configured to:

> obtain a first SER obtained by superimposing the target noise on the first sub-signal, and obtain a second SER obtained by superimposing the target noise on the second sub-signal; and
> determine the first SER as the target SER, wherein the first SER is greater than the second SER.

**36.** The TDEC test receiver according to any one of claims 20 to 35, wherein the original signal comprises a signal using 4-order pulse amplitude modulation PAM-4 or a signal using 2-order pulse amplitude modulation PAM-2.

**37.** The TDEC test receiver according to any one of claims 20 to 36, wherein the level corresponding to the original signal is represented as $P_{ave} + \frac{OMA_{outer}}{M-1}(i - \frac{M+1}{2})$, $P_{ave}$ represents the average optical power of the eye pattern, $OMA_{outer}$ represents the outer optical modulation amplitude of the second signal, 1≤i≤M, M represents the quantity of level values of the original signal, and M≥2.

FIG. 1

FIG. 2

301 — Obtain a to-be-tested signal

302 — Perform equalization processing on the to-be-tested signal

303 — Obtain an eye pattern of a signal obtained through the equalization processing, and perform sampling at a target position of the eye pattern

304 — Estimate an initial SER obtained by superposing target noise

307 — Adjust the target noise

305 — Modify the initial SER to obtain a target SER

306 — Determine whether the target SER is equal to a SER threshold

No

Yes

308 — Calculate a TDEC based on adjusted target noise

FIG. 3

FIG. 4

FIG. 5(a)

FIG. 5(b)

FIG. 6(a)

FIG. 6(b)

EP 4 576 605 A1

901

Receiver front
end

902

Processing chip

FIG. 7

## INTERNATIONAL SEARCH REPORT

| International application No. |
| --- |
| **PCT/CN2023/104424** |

| A. | CLASSIFICATION OF SUBJECT MATTER |
| --- | --- |

H04B10/077(2013.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, ENTXTC, WPABS, VEN, ENTXT, CNKI: TDEC, 眼图, 均衡, 采样, SER, 门限, 阈值, 系数, equaliz+, sampl+, threshold, eye

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112448760 A (HUAWEI TECHNOLOGIES CO., LTD.) 05 March 2021 (2021-03-05) claims 1-23, and description, paragraphs [0074]-[0272] | 1-37 |
| A | CN 113779873 A (HUAZHONG UNIVERSITY OF SCIENCE AND TECHNOLOGY) 10 December 2021 (2021-12-10) entire document | 1-37 |
| A | WO 2021163534 A1 (COMMSCOPE TECHNOLOGIES LLC) 19 August 2021 (2021-08-19) entire document | 1-37 |
| A | US 2020212943 A1 (INTEL CORPORATION) 02 July 2020 (2020-07-02) entire document | 1-37 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 August 2023** | **08 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104424**

| Patent document cited in search report | | | Publication date (day/month/year) | Patent family member(s) | | | Publication date (day/month/year) |
|---|---|---|---|---|---|---|---|
| CN | 112448760 | A | 05 March 2021 | WO | 2021036220 | A1 | 04 March 2021 |
| | | | | KR | 20220050962 | A | 25 April 2022 |
| | | | | US | 2022182139 | A1 | 09 June 2022 |
| | | | | EP | 4020843 | A1 | 29 June 2022 |
| | | | | JP | 2022546405 | A | 04 November 2022 |
| | | | | CN | 115441944 | A | 06 December 2022 |
| CN | 113779873 | A | 10 December 2021 | | None | | |
| WO | 2021163534 | A1 | 19 August 2021 | US | 2023088409 | A1 | 23 March 2023 |
| | | | | EP | 4103924 | A1 | 21 December 2022 |
| | | | | CN | 115104018 | A | 23 September 2022 |
| US | 2020212943 | A1 | 02 July 2020 | KR | 20200045507 | A | 04 May 2020 |
| | | | | WO | 2019055894 | A1 | 21 March 2019 |
| | | | | JP | 2020534723 | A | 26 November 2020 |
| | | | | EP | 3685555 | A1 | 29 July 2020 |
| | | | | US | 2023090431 | A1 | 23 March 2023 |
| | | | | CN | 111684771 | A | 18 September 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211137249